# DEMANDE DE BREVET EUROPEEN

(11) **EP 0 592 291 A1**
(43) Date de publication de la demande: **13.04.1994**
(21) Numéro de dépôt: 93402410.0
(22) Date de dépôt: 01.10.1993
(51) Int. Cl.: B60J 1/04, B60F 3/00

(54) **Dispositif de support et de commande d'un pare-brise escamotable de véhicule et véhicule équipé d'un tel dispositif**

(30) Priorité: 05.10.1992 FR 9211773
(71) Demandeur: HOBBYCAR S.A., F-41400 Thenay (FR)
(72) Inventeur: Wardavoir, François, F-41120 Cellettes (FR)

(57) **Abrégé**

L'invention concerne un dispositif de support et de commande d'un pare-brise escamotable de véhicule de plein air caractérisé en ce qu'il comporte un levier (4) central s'étendant globalement selon un plan vertical longitudinal médian (P) du véhicule, et articulé au bord inférieur (5) transversal du pare-brise (2) et à la structure fixe (6) du véhicule.

L'invention concerne également un véhicule (3) comportant un tel dispositif de support et de commande.

## Description

L'invention concerne un dispositif de support et de commande d'un pare-brise escamotable de véhicule de plein air.

La demande de brevet français FR-A-2 620 395 décrit déjà un véhicule de plein air - notamment un véhicule amphibie - muni d'un pare-brise escamotable entre une position relevée dans laquelle il est susceptible de protéger les occupants du véhicule décapoté et une position escamotée derrière un panneau avant de la caisse de façon que le véhicule présente un plan de chargement s'étendant sur la totalité de sa surface supérieure.

Dans ce document, le pare-brise qui est plan est supporté et guidé par des portées, logements et glissières s'étendant transversalement. Ces éléments de guidage et de support imposent donc un encombrement transversal important en partie avant du véhicule, ce qui nuit notamment à ses caractéristiques aérodynamiques ou hydrodynamiques. De plus, le guidage et le support du pare-brise présentent une rigidité insuffisante et ne permettent pas un blocage suffisamment fiable du pare-brise, notamment en position relevée dans laquelle les utilisateurs peuvent prendre appui sur le pare-brise pour monter ou descendre du véhicule. Egalement, les éléments de guidage et de support connus ne permettent pas l'utilisation d'un pare-brise de forme gauche.

L'invention vise donc à remédier à ces inconvénients en proposant un dispositif de support et de commande d'un pare-brise escamotable qui soit d'un faible encombrement - notamment dans la direction transversale et dans la direction longitudinale - qui procure une rigidité parfaite notamment en position relevée du pare-brise, et qui permette le blocage du pare-brise en position relevée. L'invention vise également à proposer un dispositif de support et de commande qui soit compatible avec une forme aérodynamique et/ou hydrodynamique de la partie avant du véhicule, et plus particulièrement qui soit adapté à un pare-brise de forme gauche.

L'invention vise également à proposer un tel dispositif de support et de commande motorisé, c'est-à-dire grâce auquel les manoeuvres de déploiement et d'escamotage du pare-brise ne s'effectuent pas manuellement comme dans l'art antérieur.

L'invention vise également à proposer un tel dispositif de support et de commande extrêmement simple et peu onéreux à la fabrication et au montage, et plus particulièrement qui soit constitué de peu de pièces.

L'invention vise également à proposer un tel dispositif de support et de commande qui puisse être associé rigidement par rapport au châssis d'un véhicule amphibie, notamment un châssis essentiellement constitué en partie avant du véhicule d'un longeron médian longitudinal.

Plus particulièrement, l'invention vise à proposer un tel dispositif de support et de commande qui peut être logé entre la coque étanche et la partie avant de la carrosserie d'un véhicule amphibie sans grever la longueur totale du véhicule ni ses caractéristiques aérodynamiques et/ou hydrodynamiques.

Pour ce faire, l'invention concerne un dispositif de support et de commande d'un pare-brise escamotable de véhicule de plein air caractérisé en ce qu'il comporte un levier central s'étendant globalement selon un plan vertical longitudinal médian du véhicule et articulé au bord inférieur transversal du pare-brise et à la structure fixe du véhicule. Le choix d'un tel levier en position centrale longitudinale permet de donner à la partie avant de la carrosserie des formes courbes et d'utiliser un pare-brise de forme gauche, tout en assurant un maintien rigide. Le levier s'étend donc en partie médiane longitudinale où le maximum de place peut être trouvé pour son logement et son débattement.

Le dispositif de support et de commande selon l'invention comporte en outre une glissière de guidage pour chaque extrémité transversale du pare-brise, chaque glissière de guidage étant en forme de portion de cercle dont le rayon correspond à la longueur du levier central et un moyen de verrouillage de chaque extrémité transversale du pare-brise en position supérieure dans la glissière est prévu. Ainsi, le pare-brise est guidé et supporté en partie centrale médiane par le levier central et à chacune de ses extrémités latérales par une glissière. Les glissières ont un encombrement transversal extrêmement faible et laissent donc toute liberté pour déterminer la forme de la partie avant de la carrosserie du véhicule. Le pare-brise qui peut être de forme gauche est donc guidé et supporté en permanence par trois points distincts.

Le dispositif de support et de commande selon l'invention comporte par ailleurs un organe d'actionnement central articulé au levier central. Là encore, la position centrale du levier de l'organe d'actionnement ne nuit pas aux dimensions et à la forme longitudinale et transversale de la carrosserie du véhicule. De plus, cette position centrale est parfaitement compatible avec la cinématique de mouvement du pare-brise et évite tout coincement intempestif. Le levier et l'organe d'actionnement peuvent donc être choisis de petites dimensions et caractéristiques.

Selon l'invention, les axes d'articulation du levier central à la structure fixe du véhicule, de commande réalisant l'articulation du levier central au pare-brise, et d'actionnement réalisant l'articulation de l'organe d'actionnement au levier central, permettent une libre rotation au moins autour d'une direction horizontale transversale du véhicule. Ainsi, le levier central et l'organe d'actionnement s'étendent et ont des mouvements globalement dans un plan vertical médian longitudinal du véhicule.

L'invention concerne également un véhicule de plein air caractérisé en ce qu'il comporte un pare-brise escamotable et un dispositif de support et de commande de ce pare-brise selon l'invention. Particulièrement, l'invention concerne un véhicule amphibie comprenant une coque étanche entourant une structure interne de châssis et des éléments externes de châssis associés rigidement à la structure interne, caractérisé en ce qu'il comporte un pare-brise escamotable et un dispositif de support et de commande selon l'invention, disposés intégralement à l'extérieur de la coque étanche et associés rigidement et portés par des éléments externes de châssis. Selon, l'invention, le pare-brise et le dispositif de support et de commande s'étendent dans un logement transversal ménagé entre la face avant de la coque et la face avant de la carrosserie du véhicule. Et la coque définit un logement en retrait vers l'arrière et vers le haut pour le levier central du dispositif de support et de commande. Le levier central peut être associé rigidement et porté par un élément externe de châssis lui-même associé rigidement à travers la coque à un longeron médian de la structure interne du châssis. L'organe d'actionnement peut également être porté par le même élément externe de châssis.

L'invention concerne également un dispositif de support et de commande et un véhicule comportant en combinaison tout ou partie des caractéristiques mentionnées ci-dessus ou ci-après.

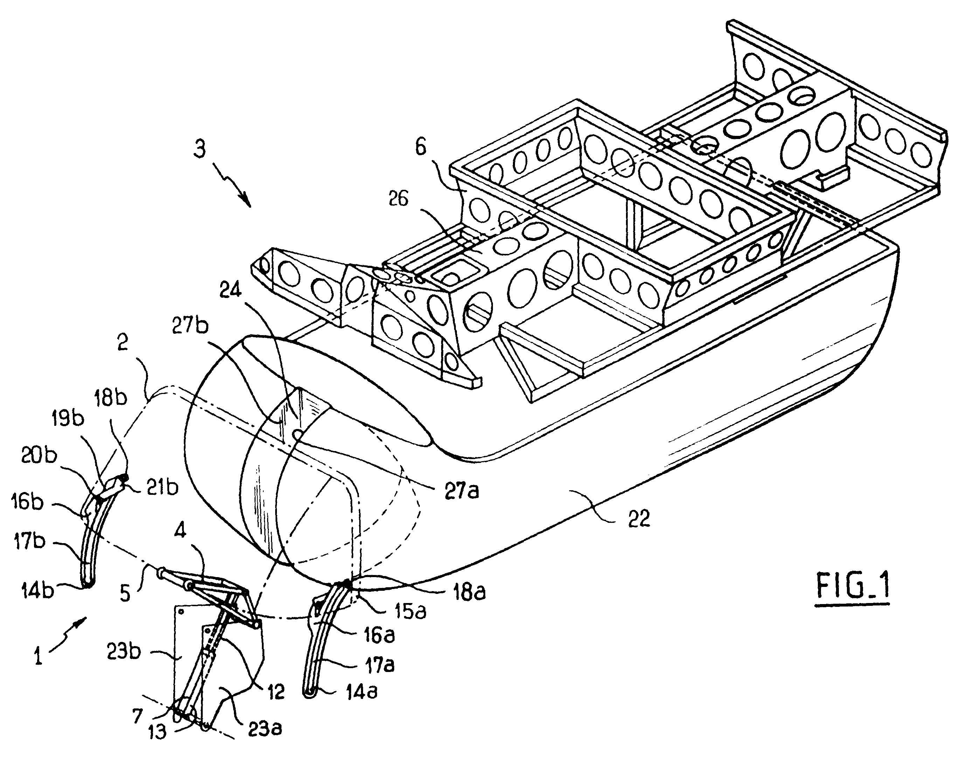

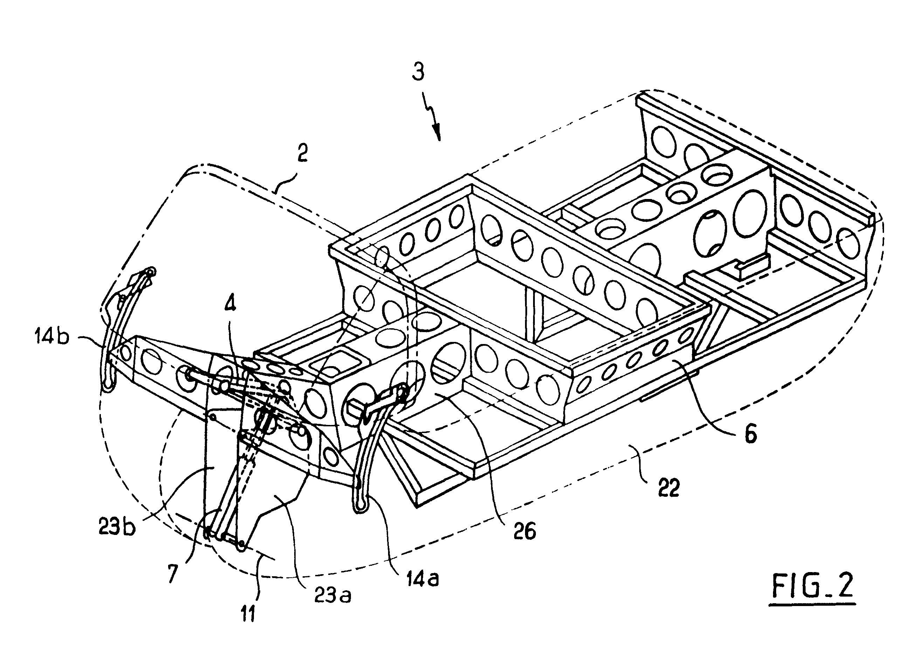

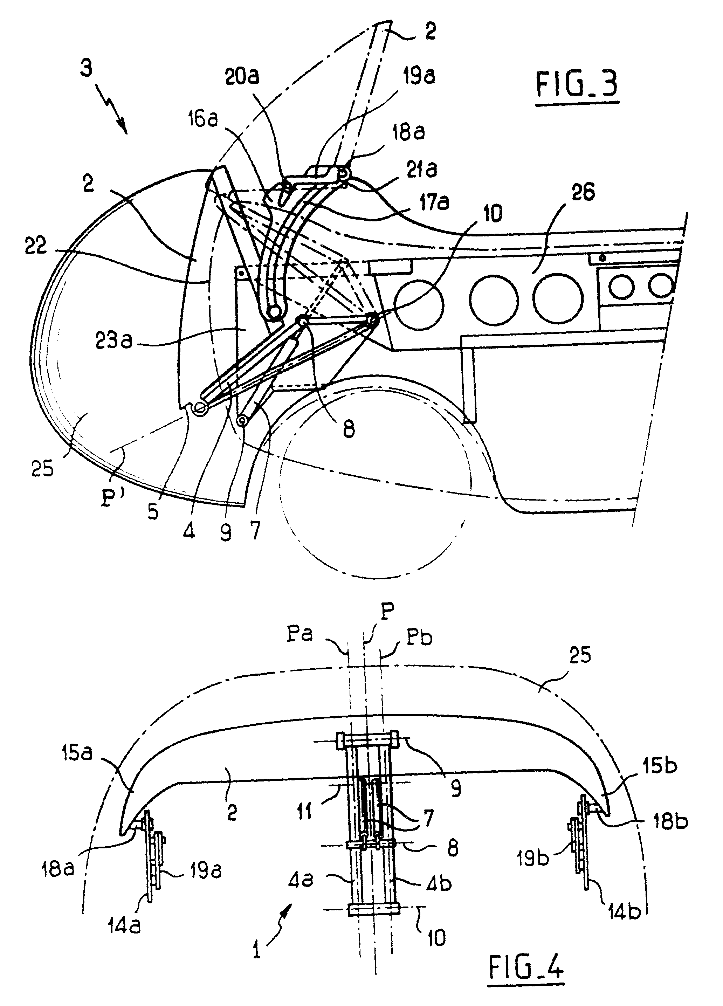

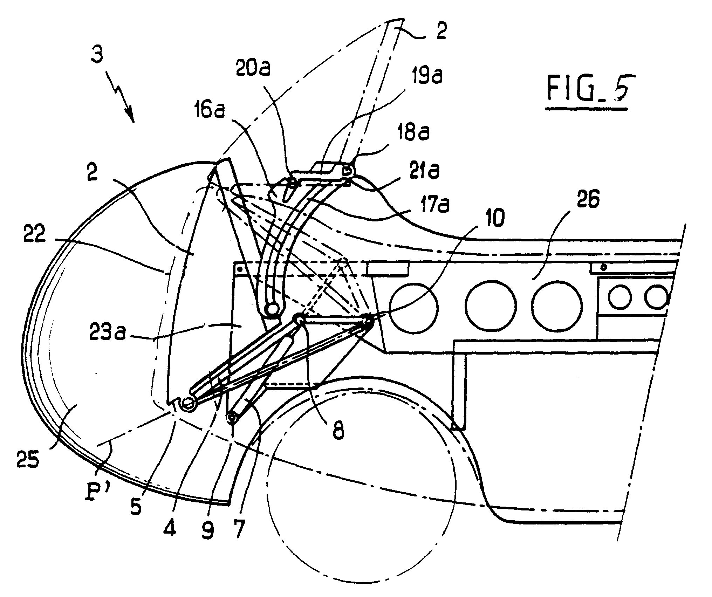

D'autres caractéristiques et avantages de l'invention apparaîtront à la lecture de la description suivante qui se réfère aux figures annexées dans lesquelles :
. La figure 1 est une vue en perspective éclatée illustrant le montage d'un dispositif selon l'invention sur un véhicule amphibie selon l'invention.
. La figure 2 est une vue en perspective similaire à la figure 1, après assemblage.
. La figure 3 est une vue de profil de la partie avant d'un véhicule selon l'invention équipé d'un dispositif selon l'invention.
. La figure 4 est une vue de dessus d'un dispositif selon l'invention.
. La figure 5 est une vue analogue à la figure 3 montrant un autre mode de réalisation du dispositif selon l'invention.

L'invention concerne un dispositif 1 de support et de commande d'un pare-brise 2 escamotable d'un véhicule 3 de plein air.

Selon l'invention le dispositif 1 comporte un levier 4 central s'étendant globalement selon un plan vertical longitudinal médian P du véhicule 3. Le levier 4 central est articulé au bord inférieur 5 transversal du pare-brise 2. Le levier 4 central est également articulé à la structure fixe 6 formant châssis pour le véhicule 3.

Selon l'invention, le dispositif 1 comporte également un organe 7 d'actionnement central, c'est-à-dire s'étendant également globalement selon le plan vertical longitudinal médian P du véhicule 3. Et cet organe d'actionnement 7 central est articulé également au levier 4 central.

Ainsi, le levier 4 central définit un axe d'actionnement 8 par lequel ce levier 4 est articulé à l'organe 7 d'actionnement, un axe d'articulation 9 par lequel le levier 4 central est articulé à la structure fixe 6 du véhicule, et un axe de commande 10 par lequel le levier 4 central est articulé au bord inférieur 5 du pare-brise 2. Selon l'invention, les axes d'articulation 9, de commande 10 et d'actionnement 8 permettent une libre rotation au moins autour d'une direction horizontale transversale du véhicule 3. Tous ces axes sont parallèles les uns aux autres. Ainsi, le levier 4 central est libre en rotation autour de l'axe d'articulation 9 par rapport à la structure fixe 6, et libre en rotation autour de l'axe de commande 10 par rapport au pare-brise 2. Et l'organe d'actionnement 7 est libre en rotation par rapport au levier central 4 autour de l'axe d'actionnement 8.

Selon l'invention, le levier 4 central est du type dans lequel l'axe d'actionnement 8 est situé entre l'axe d'articulation 9 à la structure fixe 6 et l'axe de commande 10 articulé au pare-brise 2.

Par ailleurs, l'organe d'actionnement 7 s'étend globalement vers le bas dans le plan vertical longitudinal médian P du véhicule à partir de l'axe d'actionnement 8 par lequel il est articulé au levier 4 central et l'organe d'actionnement 7 prend appui sur la structure fixe 6 par un axe d'appui 11 inférieur, c'est-à-dire qui est situé à un niveau inférieur à l'axe d'actionnement 8 en toute position du levier 4 central. Et, selon l'invention, l'axe d'appui 11 de l'organe d'actionnement 7 est plus bas que l'axe d'articulation 9 du levier 4 central à la structure fixe 6.

Par ailleurs, selon l'invention, l'axe d'actionnement 8 est décalé vers le haut par rapport au plan P' passant par l'axe d'articulation 9 et par l'axe de commande 10. Ainsi, les trois axes 8, 9, 10 du levier 4 ne sont pas dans un même plan. L'axe de commande 10 est plus bas que l'axe d'articulation 9 lorsque le pare-brise 2 est en position escamotée comme représentée à la figure 3. Au contraire, l'axe de commande 10 est plus haut que l'axe d'articulation 9 lorsque le pare-brise est relevé comme représenté en traits mixtes pointillés à la figure 3 et sur la figure 2.

Dans le mode de réalisation représenté sur les figures, le levier 4 central est constitué de deux triangles tubulaires 4a, 4b s'étendant tous deux dans des plans verticaux longitudinaux Pa, Pb situés à égale distance du plan vertical longitudinal médian du véhicule 3. Et les deux triangles 4a, 4b sont associés rigidement et maintenus parallèles l'un à l'autre par les axes d'articulation 9, de commande 10 et d'actionnement 8 qui s'étendent dans la direction transversale horizontale du véhicule 2. Les longueurs de chacun des bras constituant les triangles 4a, 4b du levier 4 central et leurs angles respectifs sont déterminés en fonction de la cinématique et des contraintes subies par ce levier 4. Les deux triangles 4a, 4b sont écartés l'un de l'autre d'une distance suffisante pour assurer un maintien suffisamment rigide du levier 4 central par rapport au pare-brise 2 et par rapport à la structure fixe 6 du véhicule.

Dans un dispositif 1 selon l'invention, l'organe d'actionnement 7 est constitué d'au moins un vérin 7 dont la tige d'actionnement 12 est articulée au levier 4 central par l'axe d'actionnement 8, et dont le cylindre 13 prend appui sur la structure fixe 6 du véhicule par l'axe d'appui 11. Dans le mode de réalisation représenté, l'organe d'actionnement 7 est constitué de deux vérins 7 parallèles et identiques. L'organe d'actionnement 7 s'étend vers le bas et vers l'avant du véhicule de telle façon que sa direction générale par rapport au véhicule reste inchangée lors des manoeuvres d'escamotage et de déploiement du pare-brise 2. Ainsi, la distance qui sépare l'axe d'actionnement 8 et l'axe d'articulation 9 est déterminée pour que la direction de l'organe d'actionnement 7 reste quasiment constante au cours de ces manoeuvres.

Par ailleurs, le dispositif 1 selon l'invention comporte en outre une glissière de guidage 14a, 14b, pour chaque extrémité 15a, 15b transversale du pare-brise 2, chaque glissière de guidage 14a, 14b étant en forme de portion de cercle dont le rayon correspond à la longueur du levier 4 central, c'est-à-dire à la distance séparant l'axe d'articulation 9 de l'axe de commande 10.

Chaque glissière de guidage 14a, 14b est constituée d'une plaque courbe 16a, 16b définissant une lumière 17a, 17b en forme de portion de cercle et dans laquelle coulisse un coulisseau 18a, 18b solidaire de chaque extrémité 15a, 15b du pare-brise 2. Chaque plaque 16a, 16b s'étend dans un plan longitudinal vertical, et chaque coulisseau 18a, 18b s'étend selon une direction horizontale transversale.

Les plaques 16a, 16b formant les glissières 14a, 14b sont associées rigidement au châssis et/ou à la carrosserie du véhicule 3, de préférence vers l'intérieur du véhicule par rapport au pare-brise.

Le dispositif selon l'invention comporte par ailleurs un moyen 19a, 19b de verrouillage à chaque extrémité 15a, 15b transversale du pare-brise 2 en position supérieure dans la glissière 14a, 14b. Ainsi, chaque moyen 19a, 19b de verrouillage a pour fonction de maintenir le pare-brise en position relevée afin d'éviter qu'il ne redescende en position escamotée sous l'effet de son poids. Chaque moyen de verrouillage 19a, 19b est constitué d'un levier de verrouillage 19a, 19b articulé par un axe 20a, 20b horizontal transversal à la plaque 16a, 16b formant la glissière 14a, 14b, du côté interne du véhicule. Ce levier 19a, 19b comporte un bras dont l'extrémité libre 21a, 21b peut être placée en butée contre le coulisseau 18a, 18b lorsque celui-ci est en position supérieure extrême de la lumière 17a, 17b. Ce bras s'étend alors au moins sensiblement horizontalement entre le coulisseau 18a, 18b et l'axe 20a, 20b d'articulation. Lorsque le levier 19a, 19b est rabattu vers le bas, le coulisseau 18a, 18b est libéré et le pare-brise 2 peut être escamoté. Les mouvements du levier 19a, 19b de verrouillage peuvent être commandés soit manuellement soit par un organe d'actionnement prévu à cet effet (non représenté). Les deux leviers 19a, 19b de verrouillage peuvent être commandés par un même organe d'actionnement ou être reliés l'un à l'autre.

Ainsi, un dispositif 1 selon l'invention est constitué, en ce qui concerne sa fonction de maintien et de support uniquement du levier 4 central, des deux glissières 14a, 14b et de l'organe d'actionnement central engendrant les mouvements du pare-brise. Aucun autre levier ou aucun autre organe de maintien ou de support n'est nécessaire.

L'invention concerne également un véhicule de plein air caractérisé en ce qu'il comporte un pare-brise 2 escamotable et un dispositif 1 de support et de commande de ce pare-brise selon l'invention.

Plus spécifiquement, l'invention concerne un véhicule 3 amphibie comprenant une coque étanche 22 entourant vers le bas au moins une structure interne 6 de châssis. Le véhicule 3 comporte également des éléments 23a, 23b externes de châssis associés rigidement à la structure interne 6 à travers la coque 22 étanche par des boulons. Selon l'invention, le véhicule 3 est caractérisé en ce qu'il comporte un pare-brise escamotable 2 et un dispositif 1 de support et de commande du pare-brise 2 selon l'invention, ce pare-brise escamotable 2 et ce dispositif 1 étant disposés intégralement à l'extérieur de la coque étanche 22 et étant associés rigidement et portés par des éléments 23a, 23b externes de châssis.

Selon l'invention, le pare-brise 2 et le dispositif 1 de support et de commande s'étendent dans un logement 24 transversal ménagé entre la face avant de la coque 22 et la face avant de la carrosserie 25 du véhicule. Plus précisément, dans un véhicule 3 selon l'invention, la coque 22 étanche définit un logement 24 en retrait vers l'arrière et vers le haut pour le levier 4 central d'un dispositif 1 selon l'invention. Ce logement 24 s'étend globalement verticalement et symétriquement par rapport au plan médian longitudinal vertical P du véhicule 3. Sa largeur et sa profondeur sont déterminées pour permettre le débattement du levier 4 central.

Le levier 4 central est associé rigidement et porté par un élément 23a, 23b externe de châssis qui est lui-même associé rigidement à travers la coque 22 à un longeron médian 26 de la structure interne 6 de châssis.

Dans le mode de réalisation représenté, l'organe d'actionnement 7 et le levier 4 central sont portés par deux plaques 23a, 23b s'étendant dans un plan vertical longitudinal du véhicule de part et d'autre du plan longitudinal médian P. Ces deux plaques 23a, 23b viennent au contact de deux parois 27a, 27b verticales longitudinales du logement 24 et sont associées à la structure interne 6 - notamment au longeron médian avant 26 de cette structure interne 6 - à travers la coque 22 par des boulons appropriés. Les deux plaques 23a, 23b externes sont identiques.

Sur la figure 1, on a représenté la structure interne 6 formant châssis pour le véhicule, la coque 22 étanche, le pare-brise 2 et le dispositif 1 de support et de commande.

Sur la figure 2, tous ces éléments sont rassemblés et montés les uns sur les autres.

Sur les figures 1 et 2, les traits cachés ont été représentés. La coque a été représentée uniquement en traits pointillés et partiellement pour plus de clarté sur la figure 2. La carrosserie 25 n'a pas été représentée sur les figures 1 et 2.

Sur la figure 3, la coque 22 a été représentée en traits mixtes pointillés et la carrosserie a été figurée de façon transparente pour illustrer le fonctionnement du dispositif 1. Le pare-brise 2 a été représenté en traits pleins en position escamotée et en traits mixtes pointillés en position relevée. Le levier 19a, 19b de verrouillage a été représenté en position de verrouillage, le pare-brise 2 étant relevé.

Sur la figure 4, on a représenté le dispositif 1 de support et de commande et la partie avant de la carrosserie 25 en traits mixtes pointillés.

Le dispositif 1 de support et de commande selon l'invention est extrêmement compact, et assure néanmoins une parfaite rigidité et un maintien fiable du pare-brise 2 en position relevée, tout en permettant un escamotage du pare-brise 2 entre la coque 22 et la carrosserie 25.

La figure 5 présente un autre mode de réalisation du dispositif selon l'invention. Cette fois, le pare-brise 2 et le dispositif de support et de commande s'étendent dans un logement transversal ménagé à l'avant de la coque 22 à l'intérieur de celle-ci.

En effet, il a été constaté que dans le premier mode de réalisation, l'escamotage du pare-brise puis son retour en position normale lorsque la fonction amphibie du véhicule est utilisée peuvent nuire à la visibilité car de l'eau voire des salissures demeurent sur la face intérieure du pare-brise.

Dans le deuxième mode de réalisation, le pare-brise à l'intérieur de la coque demeure isolé de l'eau et l'on évite cet inconvénient.

On préserve également la propreté de la face extérieure du pare-brise.

## Revendications

1. Dispositif de support et de commande d'un pare-brise escamotable de véhicule de plein air caractérisé en ce qu'il comporte un levier (4) central s'étendant globalement selon un plan vertical longitudinal médian du véhicule et articulé au bord inférieur (5) transversal du pare-brise (2) et à la structure fixe (6) du véhicule.

2. Dispositif selon la revendication 1, caractérisé en ce qu'il comporte un organe d'actionnement (7) central articulé au levier (4) central.

3. Dispositif selon l'une des revendications 1 et 2, caractérisé en ce que le levier (4) central est du type dans lequel l'axe d'actionnement (8) est situé entre l'axe d'articulation (9) à la structure fixe (6) et l'axe de commande (10) articulé au pare-brise (2).

4. Dispositif selon l'une des revendications 2 et 3, caractérisé en ce que l'organe d'actionnement (7) s'étend globalement vers le bas dans un plan vertical longitudinal médian du véhicule à partir de l'axe d'actionnement (8) par lequel il est articulé au levier (4) central, et en ce qu'il prend appui sur la structure fixe (6) par un axe d'appui (11) inférieur.

5. Dispositif selon la revendication 4, caractérisé en ce que l'axe d'appui (11) est plus bas que l'axe d'articulation (9) du levier (4) central.

6. Dispositif selon l'une des revendications 1 à 5 caractérisé en ce que l'axe d'actionnement (8) est décalé vers le haut par rapport au plan passant par l'axe d'articulation (9) et l'axe de commande (10).

7. Dispositif selon l'une des revendications 1 à 6, caractérisé en ce que l'axe de commande (10) est plus bas que l'axe d'articulation (9) lorsque le pare-brise (2) est escamoté et est plus haut que l'axe d'articulation (9) lorsque le pare-brise (2) est relevé.

8. Dispositif selon l'une des revendications 1 à 7, caractérisé en ce que les axes d'articulation (9), de commande (10) et d'actionnement (8) permettent une libre rotation au moins autour d'une direction horizontale transversale du véhicule (3).

9. Dispositif selon l'une des revendications 1 à 8, caractérisé en ce que le levier (4) central est constitué de deux triangles (4a, 4b) s'étendant dans des plans verticaux longitudinaux et associés rigidement et maintenus parallèles l'un à l'autre par les axes d'articulation (9), de commande (10) et d'actionnement (8).

10. Dispositif selon l'une des revendications 2 à 9, caractérisé en ce que l'organe d'actionnement (7) est constitué d'au moins un vérin (7) dont la tige d'actionnement (12) est articulée au levier (4) central et dont le cylindre (13) prend appui sur la structure fixe (6) du véhicule.

11. Dispositif selon l'une des revendications 1 à 10, caractérisé en ce qu'il comporte en outre une glissière de guidage (14a, 14b) pour chaque extrémité (15a, 15b) transversale du pare-brise (2) en forme de portion de cercle dont le rayon correspond à la longueur du levier (4) central.

12. Dispositif selon la revendication 11, caractérisé en ce qu'il comporte un moyen (19a, 19b) de verrouillage de chaque extrémité (15a, 15b) transversale du pare-brise (2) en position supérieure dans la glissière (14a, 14b).

13. Véhicule de plein air caractérisé en ce qu'il comporte une pare-brise (2) escamotable et un dispositif (1) de support et de commande selon l'une des revendications 1 à 12.

14. Véhicule amphibie comprenant une coque étanche (22) entourant une structure interne (6) de châssis, et des éléments (23a, 23b) externes de châssis associés rigidement à la structure interne (6), caractérisé en ce qu'il comporte un pare-brise (2) escamotable et un dispositif (1) de support et de commande selon l'une des revendications 1 à 12 de ce pare-brise (2), disposés intégralement à l'extérieur de la coque étanche (22) et associés rigidement à et portés par des éléments (23a, 23b) externes de châssis.

15. Véhicule selon la revendication 14, caractérisé en ce que le pare-brise (2) et le dispositif (1) de support et de commande s'étendent dans un logement (24) transversal ménagé entre la face avant de la coque (22) et la face avant de la carrosserie (25) du véhicule.

16. Véhicule selon l'une des revendications 14 et 15, caractérisé en ce que la coque (22) définit un logement (24) en retrait vers l'arrière et vers le haut pour le levier (4) central.

17. Véhicule selon l'une des revendications 14 à 16, caractérisé en ce que le levier (4) central est associé rigidement et porté par un élément (23a, 23b) externe de châssis lui-même associé rigidement à travers la coque (22) à un longeron médian (26) de la structure interne (6) du châssis.

18. Véhicule selon la revendication 14 caractérisé en ce que le pare-brise et le dispositif de suport et de commande s'étendent dans un logement transversal ménagé à l'avant de la coque à l'intérieur de celle-ci.
